# EUROPÄISCHE PATENTSCHRIFT

(11) **EP 1 657 346 B1**
(45) Veröffentlichungstag und Bekanntmachung des Hinweises auf die Patenterteilung: **16.07.2008**
(21) Anmeldenummer: 04013907.3
(22) Anmeldetag: 26.10.2004
(51) Int. Cl.: D06F 37/04, D06F 37/22

(54) **Befestigungssystem zwischen der Achse und der Trommel einer Waschmaschine**
Anchoring arrangement between shaft and drum of a washing machine
Système de fixation entre arbre et tambour d'une machine à laver

(43) Veröffentlichungstag der Anmeldung: 17.05.2006
(73) Patentinhaber: BSH Bosch und Siemens Hausgeräte GmbH, 81739 München (DE)
(72) Erfinder: Bobed Gracia, 50194 Zaragoza (ES)

(56) Entgegenhaltungen:
- DE-A1- 1 918 651
- DE-C- 278 774
- GB-A- 1 488 809
- US-A- 1 991 803
- US-A- 2 349 901

## Beschreibung

### AUFGABE DER ERFINDUNG

Die vorliegende Erfindung betrifft eine Waschmaschine gem. dem Oberbegriff des Anspruchs 1

### STAND DER TECHNIK

Eine solche Waschmaschine geht hervor aus dem US-Patent 2, 349,901. Darin ist das Befestigungssystem eine aus einer Vielzahl von Einzelteilen zusammengebaut.

Es ist bekannt, dass die Trommeln von Haushaltswaschmaschinen aus einem zylinderförmigen Körper mit Öffnungen für den Durchgang des Wassers bestehen, wobei der Körper im vorderen Teil offen ist, wodurch die Öffnung für das Beladen geschaffen wird, während der hintere Teil oder Rückteil einen Stern aus Aluminium aufweist, durch welchen die Trommel an der Drehachse befestigt wird, die von dem entsprechenden Behälter der Waschmaschine getragen wird.

Es sind unterschiedliche Formen bekannt, um das Befestigen oder Festmachen zwischen der Achse und dem Stern der Waschmaschinentrommel auszuführen, wobei in all diesen Fällen die verschiedenen Befestigungsformen in die Achse selbst eingebaut sind und durch ebene komplexe Bearbeitungen auf ihrer Ebene erhalten werden, so dass der Biege- und Verdrehungswiderstand durch die Widerstandsmomente bestimmt wird, die durch die maximalen Abstände ausgelöst werden, welche eine Achse mit einem Durchmesser von ungefähr 35 mm verursachen kann.

Da die Hersteller nun Waschmaschinen mit immer höheren Umdrehungszahlen auf den Markt bringen, führt dies offensichtlich zu einer immer größer werdenden mechanischen Biege- und Verdrehungsbelastung bei der Achse auf den Aluminiumstern der Trommel innerhalb des Behälters der Waschmaschine, was zu Fehleinstellung, Verringerung der Lebensdauer der Bestandteile usw. führen kann, ganz zu schweigen von der komplizierten Bearbeitung bei der Herstellung der Befestigung zwischen der Achse und dem Stern der Waschmaschinentrommel.

### BESCHREIBUNG DER ERFINDUNG

Die Aufgabe der vorliegenden Erfindung besteht in der Bereitstellung einer Befestigung einfacher Form, aber mit großer Wirksamkeit in Bezug auf den Widerstand gegenüber der Verdrehung und der Biegung, denen die Achse der Trommel einer Waschmaschine ausgesetzt ist.

Erfindungsgemäß wird eine Waschmaschine mit den Merkmalen des Anspruchs 1 angegeben.

Die vorliegende Erfindung beseitigt die Nachteile und löst die Probleme, die zuvor genannt werden, wobei zu diesem Zweck vorgesehen ist, dass das Befestigen oder Festmachen mit Hilfe eines Querelementes erfolgt, das sich über der Achse befindet, wobei das auf einem oder beiden Enden der Achse vorstehende Querelement in dem Stern der Trommel eingebettet bleibt, da sich das Querelement vor dem Einspritzvorgang in einer zu diesem Zweck am Ende der Achse ausgeführten Bearbeitung befindet, so dass die Queranordnung des Elementes über der Bearbeitung der Achse und die Anordnung in der entsprechenden Spritzform des Aluminiumsterns das Festmachen oder Befestigen der Achse am Stern und somit an der Trommel mit sich bringen, wodurch ein Befestigen aus größerer Entfernung und somit eine Erhöhung des Verdrehungswiderstandes möglich wird.

Die Bearbeitung der Achse kann aus einer Querausnehmung bestehen, wobei diese Ausnehmung eine durchgehende oder nicht-durchgehende Rille oder Queröffnung sein kann.

Das Querelement wiederum, das sich oberhalb der Ausnehmung, Öffnung oder Rille befindet, kann aus einer Art elastischen Buchse bestehen, das heißt aus einem verbreiterten rohrförmigen Körper mit einer länglichen Öffnung von einem Ende zum anderen, welche die geeignete Elastizität bereitstellt, um das Befestigen und Entfernen der Buchse und ihr Befestigen an der Position oberhalb der Öffnung oder Rille der Achse zu ermöglichen, wodurch Spiel vor und nach ihrer Anordnung vermieden und ein exaktes Einpassen ohne Spiel ermöglicht wird.

Das Querelement zum Befestigen kann aus einem Keil bestehen, der in dem Aluminiumstern eingebettet ist und der ausreichend Kraft bereitstellt, um zu gewährleisten, dass sich der Stern und somit die Trommel der Waschmaschine drehen, wenn sich die Achse dreht.

Abgesehen von den oben genannten Vorteilen ist die beschriebene Befestigung wesentlich einfacher und unkomplizierter als die sonst erforderliche komplexe Bearbeitung, wobei zudem eine mögliche Neugestaltung der Widerstandsträger und ein Entfernen der Belastungen des Kerns oder Sterns, der die am stärksten belastete Zone darstellt, ermöglicht wird.

### KURZE BESCHREIBUNG DER ZEICHNUNGEN

Zur Vervollständigung ,der nachstehenden Beschreibung und zum besseren Verständnis der Eigenschaften der Erfindung sind der vorliegenden Beschreibung Zeichnungen beigelegt, mit deren Hilfe die Erneuerungen und Vorteile der Erfindung leichter verstanden werden.
Figur 1 eine Ansicht des Endteils der Achse mit einer Bearbeitung in Form einer durchgehenden und quer verlaufenden Rille, sowie das Element, das dazu bestimmt ist, in die Rille eingefügt zu werden, wobei in diesem Fall das Element aus einer längs geöffneten zylinderförmigen Buchse besteht;
Figur 2 eine perspektivische Ansicht der zwei Teile, die in Figur 1 dargestellt sind, wobei diese zwei Teile miteinander verbunden sind;
Figur 3 eine praktische Anwendung der Erfindung, wobei das Festmachen durch das Querelement erfolgt, das auf der Achse angeordnet und durch seine Enden in den Stern der Trommel eingebettet ist, wobei die Achse auf entsprechenden Lagern gestützt ist, die in einer Buchse vorgesehen sind, die zum Behälter der Waschmaschine gehört.

### BESCHREIBUNG DER BEVORZUGTEN AUSFÜHRUNGSFORM

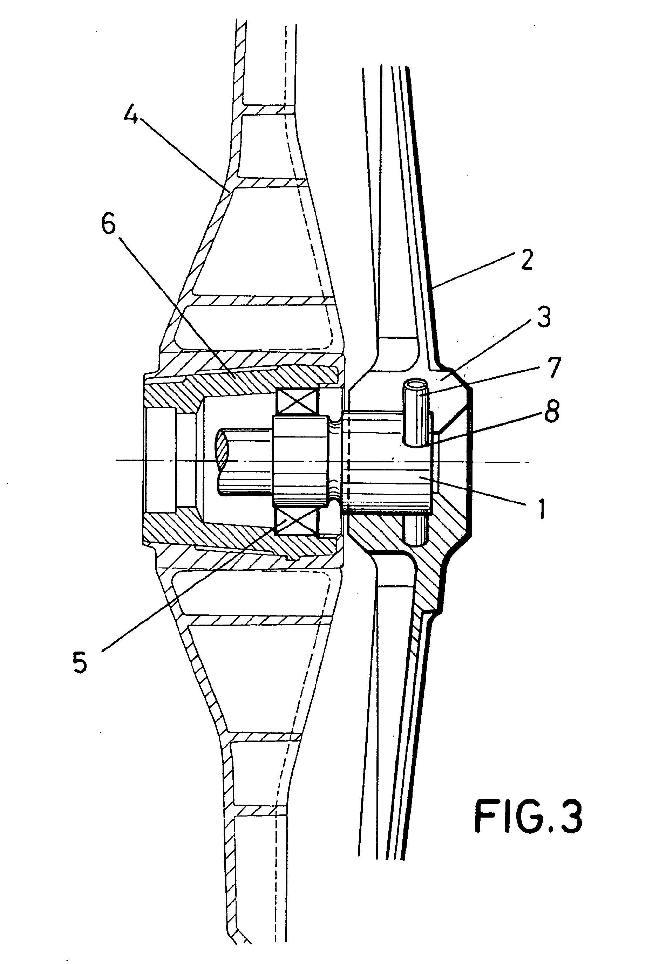

Bei Betrachtung der genannten Figuren lässt sich erkennen, wie die Befestigung der Achse 1 an der entsprechenden Trommel 2 einer Haushaltswaschmaschine mit Hilfe des Festmachens des Endes der Achse 1 auf einem Kern in Form eines Sterns 3 erfolgt, der im Boden oder der Rückwand der Trommel 2 ausgebildet ist, und wobei die Achse 1 in dem jeweiligen Behälter 4 der Waschmaschine gestützt wird, wobei sie sich, um sich zu drehen, auf Lager 5 stützt, die in einer Buchse 6 angeordnet sind, die zu diesem Zweck in einem Gefäß des Behälters 4 bereitgestellt ist, so wie in Figur 3 dargestellt.

Ausgehend von diesen Eigenschaften besteht die Neuheit der Erfindung darin, dass die Befestigung der Achse 1 an der Trommel 2, und insbesondere an dem Stern 3 der Trommel, durch ein Querelement 7 erfolgt, das auf einer zu diesem Zweck am Ende der Achse 1 ausgeführten Bearbeitung 8 befestigt wird, wobei die Enden des Querelementes 7 vorstehen, um in das dem Stern 3 entsprechende Material einzugreifen, insbesondere in Übereinstimmung mit der Innenwand des Sterns.

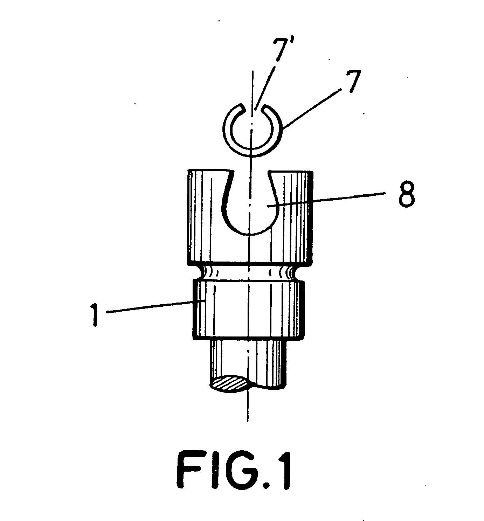

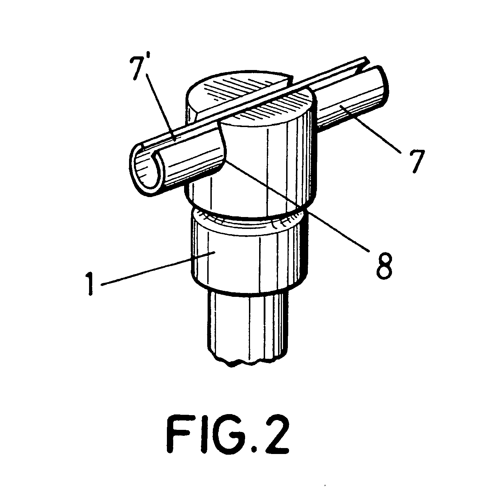

Die Bearbeitung 8 der Achse kann aus einer durchgehenden Öffnung mit einer Rille wie in Figur 1 bestehen, während das Querelement 7 aus einem rohrförmigen Körper mit einer länglichen Öffnung 7' bestehen kann, die dem Element 7 eine bestimmte Elastizität verleiht, um die Befestigung in der Bearbeitung oder der Ausnehmung 8 der Achse 1 zu ermöglichen und so einen perfekten Sitz und eine perfekte Anpassung in der Rille zu ermöglichen, welche die Rille oder Ausnehmung 8 bildet, wie in Figur 2 dargestellt.

Das Element 7 kann andere Formen oder Konfigurationen aufweisen, muss jedoch immer einen oder mehrere vorstehende Teile aufweisen, damit diese vorstehenden Teile in den Stern 3 der Trommel 2 der Waschmaschine eingreifen, wodurch eine bessere Widerstandsfähigkeit gegenüber der Verdrehung gewährleistet wird, da das Querelement 7 in seiner Anordnung auf der Achse 1 ein Festmachen aus größerer Entfernung ermöglicht, während gleichzeitig seine Anordnung mit perfekter Anpassung und ohne Spiel erfolgt.

Das Element 7 kann auch aus einem Keil beliebiger Art bestehen, so dass dieser Keil, sobald er mit dem Aluminiumkern, der den Stern 3 darstellt, in Eingriff ist, ausreichend Kraft überträgt, um den Stern und somit die Trommel 2 zu drehen.

Das in Figur 1 und 2 dargestellte Element 7 besteht vorzugsweise aus Stahl, wobei andere geeignete Materialien jedoch nicht ausgeschlossen sind.

## Patentansprüche

1. Waschmaschine umfassend eine Trommel (2) und eine Drehachse der Trommel (2), wobei die Trommel (2) in ihrem Boden einen mittigen Stern (3) aufweist, der an einem Ende der Achse (1) befestigt ist, welche sich auf entsprechenden zu diesem Zweck in einer Buchse (6) vorgesehenen Lagern (5) stützt, **dadurch gekennzeichnet, dass** die Buchse (6) in dem Behälter (4) der Waschmaschine angeordnet ist, wobei die Befestigung durch ein Querelement (7) erfolgt, das quer auf einer Bearbeitung (8) angeordnet ist, die zu diesem Zweck am Ende der Achse (1) ausgeführt ist, wobei das Querelement (7) mindestens einen vorstehenden Teil aufweist, der in die Innenseite des Sterns (3) eingreift, wodurch ein Festmachen der Befestigung zwischen der Achse (1) und dem Stern (3) der Trommel (2) erfolgt, um ein angemessenes Drehen des Sterns (3) und somit der Trommel (2), wenn sich die Achse (1) dreht, zu ermöglichen, wobei das vorstehende Querelement in dem Stern (3) der Trommel (2) eingebettet bleibt, da sich dieses vor dem Einspritzvorgang in der Bearbeitung (8) befindet, so dass die Queranordnung des Querelements (7) und die Anordnung in der entsprechenden Spritzform des Aluminium Sterns (3) das Befestigen der Achse (1) am Stern (3) und somit an der Trommel (2) mit sich bringen.

2. Waschmaschine nach Anspruch 1, **dadurch gekennzeichnet, dass** die Bearbeitung (8) der Achse (1) für das Querelement (7) eine Ausnehmung ist.

3. Waschmaschine nach Anspruch 2, **dadurch gekennzeichnet, dass** die Ausnehmung der Achse (1) für das Querelement (7) aus einer zur Achse (1) quer verlaufenden Öffnung besteht.

4. Waschmaschine nach Anspruch 3, **dadurch gekennzeichnet, dass** die Queröffnung, in der die Ausnehmung für das Querelement (7) ausgeführt ist, durchgehend ist.

5. Waschmaschine nach Anspruch 1, **dadurch gekennzeichnet, dass** die Bearbeitung (8) für das Querelement (7) aus einer quer zur Achse (1) verlaufenden Rille mit einer verjüngten Mündung besteht.

6. Waschmaschine nach Anspruch 1, **dadurch gekennzeichnet, dass** das Querelement (7) elastisch ist und aus einem hohlen Körper in Form einer Buchse mit einer längsseitigen Öffnung (7') besteht.

7. Waschmaschine nach Anspruch 1, **dadurch gekennzeichnet, dass** das Querelement (7) aus einem Keil besteht.

## Claims

1. Washing machine comprising a drum (2) and a rotational axle of the drum (2), wherein the drum (2) has in its base a central star (3) which is fastened to one end of the axle (1), which is seated on bearings (5) provided in correspondence with this purpose in a bush (6), **characterised in that** the bush (6) is arranged in the container of the washing machine, wherein the fastening is effected by a transverse element (7) arranged transversely on a machining (8) formed for this purpose at the end of the axle (1), wherein the transverse element (7) has at least one protruding part engaging in the inner side of the star (3), whereby fixing of the fastening between the axle (1) and the star (3) of the drum (2) is carried out so as to thereby enable an appropriate rotation of the star (3) and, when the axle (1) rotates, the drum (2), wherein the protruding transverse element remains embedded in the star (3) of the drum (2) since this is disposed in the machining (8) before the injection-moulding process, so that the transverse arrangement of the transverse element (7) and the arrangement in the corresponding injection mould of the aluminium star (3) brings with it the fastening of the axle (1) to the star (3) and thus to the drum (2).

2. Washing machine according to claim 1, **characterised in that** the machining (8) of the axle (1) for the transverse element (7) is a recess.

3. Washing machine according to claim 2, **characterised in that** the recess of the axle (1) for the transverse element (7) consists of an opening extending transversely to the axle (1).

4. Washing machine according to claim 3, **characterised in that** the transverse opening in which the recess for the transverse element (7) is formed is continuous.

5. Washing machine according to claim 1, **characterised in that** the machining (8) for the transverse element (7) consists of a groove, which extends transversely to the axle (1), with a narrowed mouth.

6. Washing machine according to claim 1, **characterised in that** the transverse element (7) is resilient and consists of a hollow body in the form of a bush with an opening (7') at the longitudinal side.

7. Washing machine according to claim 1, **characterised in that** the transverse element (7) consists of a wedge.

## Revendications

1. Lave-linge comprenant un tambour (2) et un axe de rotation du tambour (2), le tambour (2) présentant dans son fond une étoile centrale (3) qui est fixée sur une extrémité de l'axe (1), lequel s'appuie sur des paliers (5) correspondants ménagés à cette fin dans une douille (6), **caractérisé en ce que** la douille (6) est disposée dans le réservoir (4) du lave-linge, la fixation étant réalisée au moyen d'un élément transversal (7) qui est disposé de manière transversale sur un façonnage (8) exécuté dans ce but sur l'extrémité de l'axe (1), l'élément transversal (7) présentant au moins une partie en saillie qui a prise dans le côté intérieur de l'étoile (3), grâce à quoi un scellement de la fixation est réalisé entre l'axe (1) et l'étoile (3) du tambour (2) afin de permettre une rotation appropriée de l'étoile (3) et donc du tambour (2) lorsque l'axe (1) est en rotation, l'élément transversal en saillie restant logé dans l'étoile (3) du tambour (2) du fait que cet élément se trouve dans le façonnage (8) avant l'opération d'injection, de sorte que la disposition transversale de l'élément transversal (7) et la disposition dans le moule d'injection correspondant de l'étoile en aluminium (3) entraînent la fixation de l'axe (1) sur l'étoile (3) et donc sur le tambour (2).

2. Lave-linge selon la revendication 1, **caractérisé en ce que** le façonnage (8) de l'axe (1) est un évidement pour l'élément transversal (7).

3. Lave-linge selon la revendication 2, **caractérisé en ce que** l'évidement de l'axe (1) pour l'élément transversal (7) est constitué d'une ouverture s'étendant transversalement par rapport à l'axe (1).

4. Lave-linge selon la revendication 3, **caractérisé en ce que** l'ouverture transversale, dans laquelle l'évidement est exécuté pour l'élément transversal (7), est continue.

5. Lave-linge selon la revendication 1, **caractérisé en ce que** le façonnage (8) pour l'élément transversal (7) est constitué d'une rainure s'étendant transversalement par rapport à l'axe (1) et munie d'une embouchure rétrécie.

6. Lave-linge selon la revendication 1, **caractérisé en ce que** l'élément transversal (7) est élastique et est constitué d'un corps creux sous forme d'une douille munie d'un orifice (7') sur le grand côté.

7. Lave-linge selon la revendication 1, **caractérisé en ce que** l'élément transversal (7) est constitué d'une clavette.
